# EUROPÄISCHE PATENTSCHRIFT

(11) **EP 0 576 722 B1**
(45) Veröffentlichungstag und Bekanntmachung des Hinweises auf die Patenterteilung: **08.11.1995**
(21) Anmeldenummer: 92113940.8
(22) Anmeldetag: 15.08.1992
(51) Int. Cl.: B62D 53/08

(54) **Vorrichtung zur Höhenverstellung des Sattelauflagers einer Sattelzugmaschine**
Device for lifting the fifth wheel bearing of a semi-trailer
Dispositif pour le déplacement en hauteur de la sellette d'attelage d'une semi-remorque

(30) Priorität: 03.07.1992 DE 9208881 U
(43) Veröffentlichungstag der Anmeldung: 05.01.1994
(73) Patentinhaber: Kniep, Thomas, D-57439 Attendorn (DE)
(72) Erfinder: Kniep, Thomas, D-57439 Attendorn (DE)
(74) Vertreter: Selting, Günther, Dipl.-Ing.

(56) Entgegenhaltungen:
- WO-A-85/00331
- US-A- 3 253 840
- US-A- 3 606 386

## Beschreibung

Die Erfindung betrifft einer Vorrichtung zur Höhenverstellung des Sattelauflagers einer Sattelzugmaschine.

Sattelzugmaschinen können den auf ihrem Sattelauflager abgestützten Sattelanhänger wechseln. Da Sattelanhänger unterschiedliche Höhen haben ist es wünschenswert, das Sattelauflager der Sattelzugmaschine höhenverstellbar zu machen um die Sattelzugmaschine mit Sattelanhängern unterschiedlicher Höhen fahren zu können. Da das Sattelauflager sehr große Kräfte nicht nur in vertikaler Richtung sondern auch große Kräfte in Fahrtrichtung und große Seitenkräfte aufnehmen muß, ist eine hohe Stabilität des Sattelauflagers in Bezug auf den Fahrzeugrahmen in allen Richtungen erforderlich, und zwar sowohl im abgesenkten als auch im angehobenen Zustand.

Eine Vorrichtung zur Höhenverstellung des Sattelauflagers einer Sattelzugmaschine, von der der Oberbegriff des Patentanspruchs 1 ausgeht, ist bekannt aus US-A-3 606 386. Hierbei ist das Sattelauflager auf einer Tragplatte montiert, die nach unten ragende Stützelemente aufweist, welche in Vertikalführungen des Fahrzeugrahmens geführt ist. Die Tragplatte kann durch Hydraulikzylinder angehoben und abgesenkt werden. Im abgesenkten Zustand kann das Sattelauflager unter den Anhänger gefahren werden, um anschließend angehoben zu werden und das vordere Ende des Anhängers abzuheben.

Der Erfindung liegt die Aufgabe zugrunde, eine Vorrichtung zur Höhenverstellung des Sattelauflagers einer Sattelzugmaschine zu schaffen, die die erforderliche Stabilität insbesondere auch im angehobenen Zustand des Sattelauflagers gewährleistet.

Die Lösung dieser Aufgabe erfolgt erfindungsgemäß mit den im Patentanspruch 1 angegebenen Merkmalen.

Bei der erfindungsgemäßen Vorrichtung dient die Hubvorrichtung nur zum Anheben und Absenken des Sattelauflagers, während die Stabilisierung des Sattelauflagers durch an der Tragplatte starr angebrachte Stützelemente und durch damit zusammenwirkende Schwenkorgane erfolgt, die bei abgesenktem Sattelauflager flach liegen und nicht benutzt werden und die aufgerichtet werden können, um zusammen mit der das Sattelauflager tragenden Tragplatte eine trapezförmige Struktur zu bilden. Die Schwenkorgane stehen somit im hochgeschwenkten Zustand schräg nach außen und unten von der Tragplatte ab, so daß sie schräg von unten her gegen die Tragplatte stoßen und sowohl Längskräfte als auch Querkräfte aufnehmen können, die auf das Sattelauflager einwirken.

Vorzugsweise erstrecken sich die Schwenkorgane im wesentlichen über die gesamte Breite der Tragplatte. Die Schwenkorgane können dabei Platten- oder Rahmenstrukturen sein, die eine hohe Stabilität in Querrichtung des Fahrzeugs haben.

Bei einer bevorzugten Ausführungsform der Erfindung sind die Schwenkorgane mit bleibenden Scharnieren an dem Fahrzeugrahmen schwenkbar und sie sind mit lösbaren Kupplungselementen mit der Tragplatte verbindbar.

Die Schwenkorgane können im Zustand der abgesenkten Tragplatte von der Tragplatte wegweisen. Nach dem Hochfahren der Tragplatte können sie um die bleibenden Scharniere herum hochgeklappt werden, wobei das Hochklappen über den oberen Totpunkt der Gewichtsbelastung hinweg erfolgt. Das Umklappen wird dadurch verhindert, daß Anschläge vorgesehen sind, die die Schwenkorgane im hochgeschwenkten Zustand in schräger Lage gegen Überschwenken in Richtung auf die Tragplatte sichern. Durch die Anschläge wird der hochgeschwenkte Zustand der Schwenkorgane stabil gemacht, so daß die Schwenkorgane, die dann an ihren oberen Enden mit der Tragplatte verbunden sind, mit den als Seitenplatten ausgebildeten Stützelementen zusammengreifen und eine starre Struktur bilden.

Bei einer anderen Ausführungsform der Erfindung sind die Schwenkorgane durch Scharniere bleibend mit der Tragplatte verbunden. Die unteren Enden der Schwenkorgane gleiten relativ zu dem Fahrzeugrahmen und sie sind bei angehobener Tragplatte an dem Fahrzeugrahmen abstützbar. Die Schwenkorgane sind hierbei gewissermaßen Klappen, die gelenkig mit der Tragplatte verbunden sind und die bei angehobener Tragplatte schräg nach außen und unten von der Tragplatte herabhängen. Die unteren Enden können relativ zum Rahmen entweder verriegelt werden oder so abgestützt werden, daß sie Vorsprünge des Rahmens hintergreifen.

Zur Gewährleistung einer exakten Parallelführung und zur Aufnahme zusätzlicher Querkräfte, können an der Tragplatte Führungsbolzen vorgesehen sein, die an dem Fahrzeugrahmen vertikal geführt sind.

Im folgenden werden unter Bezugnahme auf die Zeichnungen Ausführungsbeispiele der Erfindung näher erläutert.

Es zeigen:
- Fig. 1: eine perspektivische Darstellung der Vorrichtung bei abgesenkter Tragplatte
- Fig. 2: eine Darstellung ähnlich derjenigen von Fig.1 bei angehobener Tragplatte
- Fig. 3: eine Ansicht einer geringfügig modifizierten Ausführungsform aus Richtung des Pfeiles III von Fig. 1 und
- Fig. 4: eine Ansicht der modifizierten Ausführungsform aus Richtung des Pfeiles IV von Fig. 2.

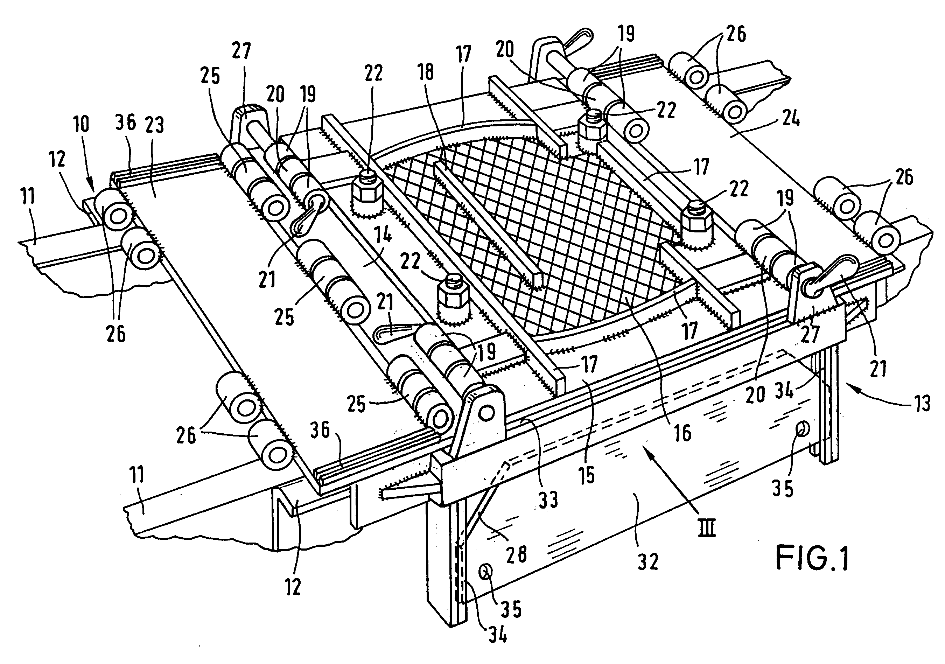

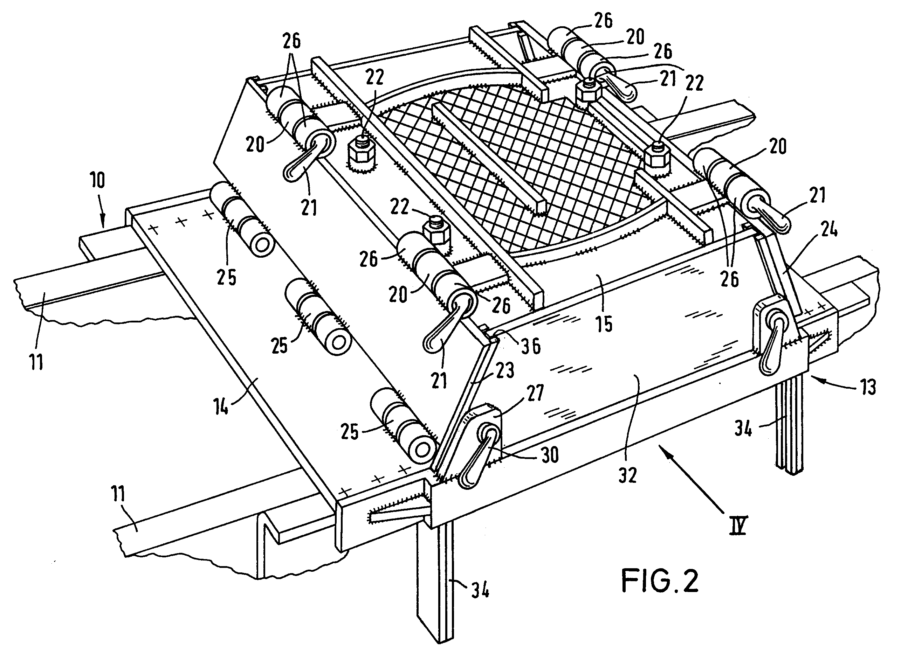

Bei dem Ausführungsbeispiel der Figuren 1 und 2 weist der Fahrzeugrahmen 10 der Sattelzugmaschine zwei längslaufende parallele Holme 11 auf, an deren Außenseiten L-förmige Lastaufnahmeelemente 12 befestigt sind, die zur Verstärkung im Bereich des (nicht dargestellten) Sattelauflagers dienen. Auf dem Fahrzeugrahmen 10 ist die Sattelauflagervorrichtung 13 befestigt, die eine den Fahrzeugrahmen 10 in Querrichtung überspannende Unterplatte 14 und davon zu beiden Seiten nach unten abstehende Schenkel aufweist. Da die Auflagervorrichtung 13 fest mit dem Fahrzeugrahmen 10 verbunden ist, kann sie als Bestandteil des Fahrzeugrahmens angesehen werden.

Auf der Unterplatte 14, die sich über die gesamte Breite des Fahrzeugrahmens erstreckt, liegt die Tragplatte 15 auf. Die Tragplatte 15 weist an ihrer Oberseite eine Sattelaufnahmefläche 16 auf, auf der das Sattelauflager montiert wird. Die Sattelaufnahmefläche 16 ist durch Leisten 17 begrenzt, die auf die Oberseite der Tragplatte 15 aufgeschweißt sind. Eine weitere Leiste 18 ist in dem von den Leisten 17 begrenzten Feld aufgeschweißt. Die Tragplatte 15 weist an ihrer vorderen und hinteren Kante jeweils zwei Kupplungseinrichtungen 19 auf, die mit Kupplungseinrichtungen 20 der Tragplatte 15 zusammengreifen. Diese Kupplungseinrichtungen 19 und 20 sind Ösen, die an den jeweiligen Klappen befestigt sind und durch die jeweils ein Steckbolzen 21 hindurchgesteckt ist. Wenn die Kupplungseinrichtungen 19 und 20 jeweils durch einen Steckbolzen 21 in gegenseitigem Eingriff gehalten werden, ist die Tragplatte 15 fest und unverrückbar auf der Unterplatte 14 befestigt.

Von den seitlichen Kanten der Tragplatte 15 stehen starr an der Tragplatte angebrachte Stützelemente 32 nach unten ab. Jedes der beiden Stützelemente 32 ist hier als eine Seitenplatte ausgebildet, die sich über die gesamte Länge (in Fahrzeuglängsrichtung) der Tragplatte 15 erstreckt. Die Stützelemente 32, die durch jeweils einen Schlitz 33 zwischen der Unterplatte 14 und der Auflagervorrichtung 13 hindurchragen, sind mit ihren vertikalen Kanten in Vertikalführungen 34 der Auflagervorrichtung 13 geführt.

An der Tragplatte 15 sind Führungsbolzen 22 befestigt, die von der Tragplatte 15 senkrecht nach unten abstehen und in entsprechenden Führungsbuchsen der Auflagervorrichtung 13 vertikal geführt sind, um eine Parallelführung der Tragplatte 15 zu erreichen.

An dem in Fahrzeuglängsrichtung vornliegenden und an dem zurückliegenden Ende der Unterplatte 14 ist jeweils Schwenkorgan 23, 24 angebracht. Jedes dieser Schwenkorgane 23 und 24 ist eine Platte, die sich im wesentlichen über die gesamte Breite des Fahrzeugrahmens 10 erstreckt. Jedes Schwenkorgan ist über bleibende Scharniere 25 mit der Unterplatte 14 verbunden.

Unter bleibendes Scharnier wird ein Scharnier verstanden, dessen beiderseitige Scharnierteile in permanentem gegenseitigen Eingriff sind und nicht voneinander gelöst werden müssen. Die Scharniere 25 bestehen jeweils aus zueinander ausgerichteten Ösen von denen eine an dem Schwenkorgan und zwei andere an der Unterplatte 14 angeschweißt sind, wobei die Öse des Schwenkorgans um einen Zapfen herum schwenkbar ist. Bei dem vorliegenden Ausführungsbeispiel sind drei Scharniere 25 für jedes der Schwenkorgane 23 und 24 vorgesehen.

In den Figuren 1 und 2 sind die Scharniere 25 des Schwenkorgans 24 aus Gründen der Übersichtlichkeit nicht dargestellt.

Die Schwenkorgane 23 und 24 tragen an ihren von der Unterplatte 14 abgewandten Enden Kupplungselemente 26, die mit den Kupplungselementen 19 der Tragplatte 15 zusammengreifen können. Die Kupplungselemente 26 sind in gleicher Weise ausgebildet und angeordnet wie die Kupplungselemente 19 der Unterplatte 14.

Im abgesenkten Zustand der Tragplatte 15, in dem die Tragplatte unmittelbar auf der Unterplatte 14 aufliegt, ist die Tragplatte mit den zusammengreifenden Kupplungselementen 19 und 20 an der Unterplatte 14 gesichert. In diesem Zustand sind die Schwenkorgane 23 und 24 nach außen geschwenkt, so daß sie flach auf der Grundplatte 14 aufliegen.

An der Auflagervorrichtung 13 sind Lagerböcke 27 angebracht. Diese haben Löcher zum Hindurchstecken der Steckbolzen 21, die bei abgesenkter Tragplatte 15 durch die Kupplungseinrichtungen 19 und 20 hindurchgehen (Fig. 1).

Um die Tragplatte 15 anzuheben, werden die Steckbolzen 21 herausgezogen. Dann wird eine Hubvorrichtung betätigt, die die Tragplatte in den in Fig. 2 dargestellten Zustand bringt. Bei hochgefahrener Tragplatte 15 fluchten Löcher 35 der Stützelemente 32 mit den Löchern der Lagerböcke 27 und denjenigen der Kupplungselemente 19. Durch diese Löcher werden Steckbolzen 30 gesteckt, die die Tragplatte 15 im angehobenen Zustand sichern. Dann werden die Schwenkorgane 23 und 24 um die Scharniere 25 herum verschwenkt, wobei sie über den vertikalen Zustand hinausbewegt werden, so daß ihre oberen Enden konvergieren. Dieser Zustand wird durch die schrägen Kanten 28 der Stützelemente 32 begrenzt. Im hochgeschwenkten Zustand der Schwenkorgane greifen die Kupplungselemente 26 der Schwenkorgane mit den Kupplungselementen 20 der Tragplatte 15 zusammen. Die Steckbolzen 21 werden gemäß Fig. 2 durch die miteinander fluchtenden Kupplungselemente 20 und 26 hindurchgesteckt, so daß die oberen Enden der Schwenkorgane 23 und 24 mit dem vorderen und dem hinteren Rand der Tragplatte 15 verbunden werden. Die Schwenkorgane 23, 24 haben Aufnahmenuten 36, in die die schrägen Kanten 28 der Stützelemente 32 eindringen, wenn die Schwenkorgane hochgeschwenkt werden. Dadurch bilden die Schwenkorgane 23,24 zusammen mit den Stützelementen 32 eine steife Tragstruktur.

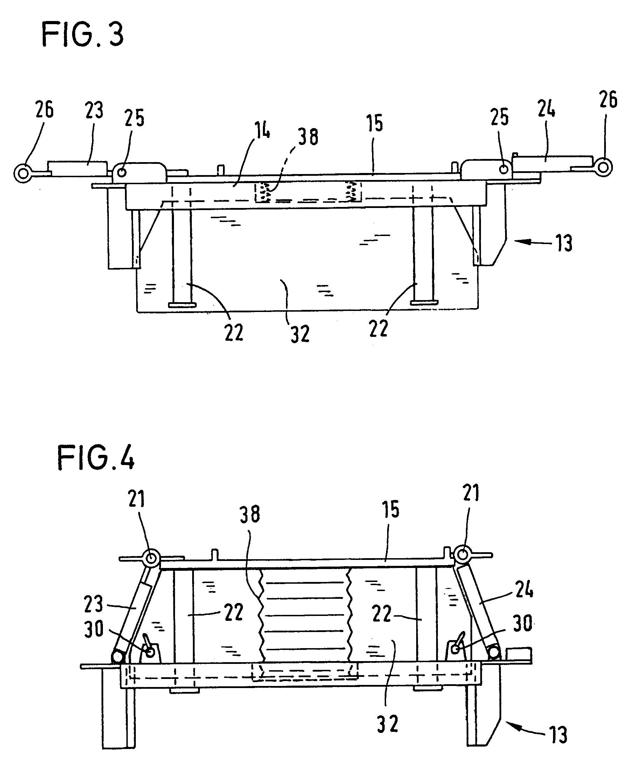

Die Figuren 3 und 4 zeigen eine geringfügig abgewandelte Ausführungsform der Vorrichtung. In diesen Darstellungen ist die Hubvorrichtung 38 erkennbar, die an der Auflagervorrichtung 13 bzw. am Fahrzeugrahmen abgestützt ist und die an ihrem vertikal bewegbaren oberen Ende mit der Tragplatte 15 verbunden ist. Ferner sind die Führungsbolzen 22 erkennbar, die ebenfalls an der Tragplatte 15 befestigt und in Führungen der Auflagervorrichtung 13 vertikal geführt sind. Die Hubvorrichtung 38 ist hier ein mit Druckluft zu füllender Balg, der im zusammengelegten Zustand in einer Vertiefung der Unterplatte 14 enthalten ist.

## Patentansprüche

1. Vorrichtung zur Höhenverstellung des Sattelauflagers einer Sattelzugmaschine, mit einer die Tragplatte (15) des Sattelauflagers gegenüber dem Fahrzeugrahmen (10) anhebenden Hubvorrichtung (35) und mit an der Tragplatte (15) vorgesehenen, in Vertikalführungen (34) geführten Stützelementen (32),
**dadurch gekennzeichnet,**
daß die Stützelemente (32) durch Verriegelungselemente (30) bei angehobener Tragplatte (15) am Fahrzeugrahmen (10) fixierbar sind, und daß an den in Fahrzeuglängsrichtung entgegengesetzten Enden der Tragplatte (15) um horizontale Achsen schwenkbare Schwenkorgane (23,24) vorgesehen sind, die bei abgesenkter Tragplatte (15) flachlegbar sind und bei angehobener Tragplatte (15) derart aufrichtbar sind, daß sie zur Tragplatte hin konvergieren und mit ihrem einen Ende am Fahrzeugrahmen (10) abgestützt und an ihrem anderen Ende mit der Tragplatte (15) verbunden sind.

2. Vorrichtung nach Anspruch 1, dadurch gekennzeichnet, daß die Schwenkorgane (23,24) sich im wesentlichen über die gesamte Breite der Tragplatte (15) erstrecken.

3. Vorrichtung nach Anspruch 1 oder 2, dadurch gekennzeichnet, daß die Stützelemente Seitenplatten sind, die von den Seitenwänden der Tragplatte (15) herabhängen.

4. Vorrichtung nach einem der Ansprüche 1-3, dadurch gekennzeichnet, daß die Schwenkorgane (23,24) über bleibende Scharniere (25) mit dem Fahrzeugrahmen (10) schwenkbar verbunden sind und über lösbare Kupplungselemente (26) mit Kupplungselementen (20) der Tragplatte (15) verbindbar sind und daß an dem Fahrzeugrahmen (10) Kupplungselemente (19) vorgesehen sind, die bei abgesenkter Tragplatte (15) mit den Kupplungselementen (20) der Tragplatte (15) verbindbar sind.

5. Vorrichtung nach Anspruch 4, dadurch gekennzeichnet, daß die Tragplatte (15) zwischen die Kupplungselemente (19) des Fahrzeugrahmens (10) absenkbar ist.

6. Vorrichtung nach Anspruch 4 oder 5, dadurch gekennzeichnet, daß am Fahrzeugrahmen (10) Löcher vorgesehen sind, durch die Bolzen zum Fixieren der Vertikalführungen bei angehobener Tragplatte (15) und zum Verbinden der Kupplungselemente (19,20) des Fahrzeugrahmens (10) und der Tragplatte (15) bei abgesenkter Tragplatte (15) hindurchsteckbar sind.

7. Vorrichtung nach einem der Ansprüche 4-6, dadurch gekennzeichnet, daß die bleibenden Scharniere (25) an den der Tragplatte (15) abgewandten Enden der Schwenkorgane (23,24) angeordnet sind.

8. Vorrichtung nach einem der Ansprüche 1-7, dadurch gekennzeichnet, daß an den Stützelementen (32) Anschläge vorgesehen sind, die die Schwenkorgane (23,24) im hochgeschwenkten Zustand in schräger Lage gegen Überschwenken in Richtung auf die Tragplatte (15) abstützen.

9. Vorrichtung nach Anspruch 1, dadurch gekennzeichnet, daß die Schwenkorgane durch Scharniere mit der Tragplatte (15) verbunden sind und beim Anheben der Tragplatte relativ zu dem Fahrzeugrahmen gleiten und bei angehobener Tragplatte an ihren unteren Enden relativ zum Fahrzeugrahmen abstützbar sind.

10. Vorrichtung nach einem der Ansprüche 1-9, dadurch gekennzeichnet, daß an der Tragplatte (15) Führungsbolzen (22) vorgesehen sind, die an dem Fahrzeugrahmen (10) vertikal geführt sind.

## Claims

1. A device for adjusting the height of the fifth wheel of a semitrailer tractor, comprising a lifting device (35) lifting the supporting plate (15) of the fifth wheel with respect to the vehicle frame (10), and supporting elements (32) provided on the supporting plate (15) and guided in vertical guides (34),
**characterized in**
that the supporting elements (32) are fixable to the vehicle frame (10) by locking means (30) when the supporting plate (15) is in the lifted state, and that on the ends of the supporting plate (15) opposite in the longitudinal direction of the vehicle, pivot elements (23,24) pivotable about horizontal axes are provided, which pivot elements can be laid flat when the supporting plate (15) is in the lowered state, and which can be erected in such a manner that they converge toward the supporting plate and are supported on the vehicle frame (10) with their one end and connected to the supporting plate (15) with their other end when the supporting plate (15) is in the lifted state.

2. The device according to claim 1, characterized in that the pivot elements (23,24) substantially extend over the entire width of the supporting plate (15).

3. The device according to claim 1 or 2, characterized in that the supporting elements are side plates depending from the side walls of the supporting plate (15).

4. The device according to one of claims 1 to 3, characterized in that the pivot elements (23,24) are pivotably connected to the vehicle frame (10) via permanent hinges (25) and connectable to coupling elements (20) of the supporting plate (15) via releasable coupling elements (26), and that coupling elements (19) are provided on the vehicle frame (10), which are connectable to the coupling elements (20) of the supporting plate (15) when the supporting plate (15) is in the lowered state.

5. The device according to claim 4, characterized in that the supporting plate (15) is lowerable between the coupling elements (19) of the vehicle frame (10).

6. The device according to claim 4 or 5, characterized in that the vehicle frame (10) is provided with holes through which pins can be put for fixing the vertical guides when the supporting plate (15) is in the lifted state and for connecting the coupling elements (19,20) of the vehicle frame (10) and the supporting plate (15) when the supporting plate (15) is in the lowered state.

7. The device according to one of claims 4 to 6, characterized in that the permanent hinges (25) are arranged at the ends of the pivot elements (23,24) facing away from the supporting plate (15).

8. The device according to one of claims 1 to 7, characterized in that stoppers are provided on the supporting elements (32), which support the pivot elements (23,24) in the pivoted-up state in oblique position against pivoting-over toward the supporting plate (15).

9. The device according to claim 1, characterized in that the pivot elements are connected to the supporting plate (15) by means of hinges and slide relative to the vehicle frame when the supporting plate is lifted and are supportable relative to the vehicle frame at their lower ends when the supporting plate is in the lifted state.

10. The device according to one of claims 1 to 9, characterized in that guide pins (22) are provided on the supporting plate (15) which are vertically guided on the vehicle frame (10).

## Revendications

1. Dispositif destiné au réglage en hauteur de la selle d'attelage d'un semi-remorque comportant un mécanisme de levage (35) relevant la plaque d'appui (15) de la selle d'attelage par rapport au châssis (10) du véhicule, et des éléments de support (32) prévus sur la plaque d'appui (15), qui sont guidés dans des guidages verticaux (34),
caractérisé en ce que,
lorsque la plaque d'appui (15) est relevée, les éléments de support (32) peuvent être fixés sur le châssis (10) du véhicule par des éléments de verrouillage (30), et en ce que des organes pivotants (23, 24) pouvant pivoter autour d'axes horizontaux sont prévus sur les extrémités opposées au sens longitudinal du véhicule de la plaque d'appui (15), qui peuvent être mis à plat lorsque la plaque d'appui (15) est abaissée et qui, lorsque la plaque d'appui (15) est relevée, peuvent être relevés de telle sorte qu'ils convergent vers la plaque d'appui et prennent appui sur le châssis (10) du véhicule par l'une de leurs extrémités, alors que par leur autre extrémité, ils sont reliés à la plaque d'appui (15).

2. Dispositif selon la revendication 1, caractérisé en ce que les organes pivotants (23, 24) s'étendent sensiblement sur toute la largeur de la plaque d'appui (15).

3. Dispositif selon l'une des revendications 1 ou 2, caractérisé en ce que les éléments de support sont des plaques latérales qui pendent des parois latérales de la plaque d'appui (15) vers le bas.

4. Dispositif selon l'une des revendications 1 à 3, caractérisé en ce que les organes pivotants (23, 24) sont reliés au châssis (10) du véhicule par des charnières permanentes (25) de façon à pouvoir pivoter, et qu'ils peuvent être reliés à des éléments de couplage (20) de la plaque d'appui (15) par l'intermédiaire d'éléments de couplage amovibles (26), et en ce que des éléments de couplage (19) sont prévus sur le châssis (10) du véhicule qui, lorsque la plaque d'appui (15) est abaissée, peuvent être reliés aux éléments de couplage (20) de la plaque d'appui (15).

5. Dispositif selon la revendication 4, caractérisé en ce que la plaque d'appui (15) peut être abaissée entre les éléments de couplage (19) du châssis (10) du véhicule.

6. Dispositif selon l'une des revendications 4 ou 5, caractérisé en ce que des trous sont prévus dans le châssis (10) du véhicule, dans lesquels peuvent être insérés des boulons destinés à la fixation des guidages verticaux, lorsque la plaque d'appui (15) est relevée, et à la liaison des éléments de couplage (19, 20) du châssis (10) du véhicule et de la plaque d'appui (15), lorsque la plaque d'appui (15) est abaissée.

7. Dispositif selon l'une des revendications 4 à 6, caractérisé en ce que les charnières permanentes (25) sont disposées sur les extrémités des organes pivotants (23, 24) opposées à la plaque d'appui (15).

8. Dispositif selon l'une des revendications 1 à 7, caractérisé en ce que des butées sont prévues sur les éléments de support (32), qui supportent les organes pivotants (23, 24) à l'état relevé en position inclinée en les empêchant de basculer en direction de la plaque d'appui (15).

9. Dispositif selon la revendication 1, caractérisé en ce que les organes pivotants sont reliés à la plaque d'appui (15) par des charnières et coulissent par rapport au châssis du véhicule lors du relèvement de la plaque d'appui, et que, lorsque la plaque d'appui est relevée, leurs extrémités inférieures peuvent être supportées par rapport au châssis du véhicule.

10. Dispositif selon l'une des revendications 1 à 9, caractérisé en ce que des axes de guidage (22) sont prévus sur la plaque d'appui (15), qui sont guidés verticalement sur le châssis (10) du véhicule.
